Europäisches Patentamt

(19) European Patent Office

Office européen des brevets

(11) Veröffentlichungsnummer: **0 084 595**
**B1**

(12) **EUROPÄISCHE PATENTSCHRIFT**

(45) Veröffentlichungstag der Patentschrift:
27.03.85

(51) Int. Cl.⁴: **B 23 Q 11/08**

(21) Anmeldenummer: 82108348.2

(22) Anmeldetag: **10.09.82**

(54) Schutzabdeckung für ein zumindest teilweise freiliegendes Maschinenelement.

(30) Priorität: 15.01.82 DE 3201058

(43) Veröffentlichungstag der Anmeldung:
03.08.83 Patentblatt 83/31

(45) Bekanntmachung des Hinweises auf die Patenterteilung:
27.03.85 Patentblatt 85/13

(84) Benannte Vertragsstaaten:
AT BE CH FR GB IT LI LU NL SE

(56) Entgegenhaltungen·
CH - A - 227 830
DE - B - 2 546 988
DE - C - 1 103 866
DE - U - 1 692 169
DE - U - 1 873 419
DE - U - 1 883 255
GB - A - 1 303 791

(73) Patentinhaber: PROMA Produkt- und
Marketing-Gesellschaft m.b.H., Ernst-Sachs-Strasse 21,
D-7310 Plochingen (DE)

(72) Erfinder: Lipinski, Reinhard, Ernst-Sachs-Strasse 21,
D-7310 Plochingen (DE)
Erfinder: Neff, Karl, Schillerstrasse 10,
D-7035 Waldenbuch (DE)

(74) Vertreter: Rüger, Rudolf, Dr.-Ing.,
Webergasse 3 Postfach 348, D-7300 Esslingen/Neckar
(DE)

## Beschreibung

Die Erfindung betrifft eine Schutzabdeckung für ein zumindest teilweise freiliegendes längliches Maschinenelement, dem mindestens ein die Schutzabdeckung durchdringendes, relativ zu dem Maschinenelement längsbewegliches Glied zugeordnet ist, mit einer sich längs des Maschinenelementes erstreckenden und dieses abdeckenden elastischen Abdeckhülle, die mit einem durchgehenden Längsschlitz versehen ist, dessen beide Ränder nach Art eines Reißverschlusses auf der einen Seite eine längsverlaufende Profilnut und auf der anderen Seite eine zugeordnete, ebenfalls längsverlaufende Profilleiste tragen, wobei an dem beweglichen Glied, in Bewegungsrichtung gesehen vorne und hinten, jeweils ein bei einer Längsbewegung des beweglichen Gliedes die beidseitig des Längsschlitzes liegenden Teile der Abdeckhülle unter Verschluß des lediglich im Bereiche des beweglichen Gliedes geöffneten Längsschlitzes durch die in die Profilnut sich fortlaufend einlegende Profilleiste zusammenführendes Schieberelement mit aufeinander zulaufenden, mit der Abdeckhülle zusammenwirkenden Schließflächen angeordnet ist.

Aus der DE-U-1 883 255 ist eine Schutzabdeckung mit diesen Merkmalen für an Werkzeugmaschinen angebrachte Maßstäbe bekannt, um eine Verschmutzung der Maßabstriche durch Schmieröle od. dgl. zu verhindern. Diese Schutzabdeckung besteht aus zwei nach Art eines Reißverschlusses miteinander verbundenen Folienstreifen, die randseitig an einem einen Maßstab tragenden Maschinenbett od. dgl. befestigt sind. Dazu muß das Maschinenbett entweder mit einer Längsnut ausgebildet oder mit beidseitig des Maßstabes angeordneten vorstehenden Leisten versehen sein, an denen die beiden Folien derart befestigt werden können, daß die Schutzabdeckung im Abstand von dem Maßstab gehalten ist. Schon aus diesem Grunde ist diese Schutzabdeckung für Wellen oder Spindeln nicht geeignet.

Beispielsweise bei Werkzeugmaschinen, die auf Flachbahnen geführte, durch Gewindespindeln angetriebene Schlitten oder Supporte aufweisen, müssen aber die Gewindespindeln in ihren freiliegenden Bereichen abgedeckt werden, um sie vor Beschädigungen oder Beeinträchtigungen etwa durch Kühlmittel, herabfallende Späne od. dgl. zu schützen. Es sind zu diesem Zwecke eine Reihe von Schutzabdeckungen bekanntgeworden, die zwar ihrer Aufgabe in der Regel mehr oder minder gerecht werden, die aber doch alle systembedingte Nachteile aufweisen, welche ihre Einsatzmöglichkeiten beschränken oder unwirtschaftlich machen.

So ist in der Praxis es bekannt, Spindeln, Säulen u. dgl. mit Faltenbälgen abzudecken. Diese Faltenbälge müssen aber notwendigerweise ein ungünstiges Verhältnis des Außendurchmessers zu dem abzudeckenden Spindeldurchmesser aufweisen, weil bei kleiner werdendem Balgaußendurchmesser sich die Blocklänge des zusammengeschobenen Faltenbalges und damit auch die Gesamtlänge eines damit ausgerüsteten Spindelantriebs erhöhen. Außerdem müssen bei langen Hüben solche Faltenbälge auf der Spindel durch Gleitscheiben abgestützt und/oder von außen her mittels Halte- und Führungsösen gehaltert werden. Daneben sind auch sogenannte Spiralfeder-Abdeckungen bekanntgeworden, die im Prinzip jeweils aus einer aus hochwertigem, gehärtetem Federbandstahl gewickelten Spiralfeder bestehen, welche die zu schützende Spindel umgibt. Solche Spiralfedern-Abdeckungen sind nicht ohne weiteres lageunabhängig einbaubar; bei vertikaler Einbaulage muß Vorsorge getroffen werden, daß die Spiralwindungen nicht ineinanderfallen und die Spirale sich damit öffnet, womit die Schutzfunktion entfällt. Außerdem trifft beim Ausziehen der Spiralfeder-Abdeckung eine Drehbewegung auf, die durch entsprechende Lagerflansche an den Enden der Spiralfeder-Abdeckung aufgenommen werden muß. Längere Spindeln können nur durch Aneinanderkuppeln von mehreren Spiralfedern geschützt werden, was verhältnismäßig teuer und aufwendig ist.

Schließlich sind auch noch Schutzabdeckungen bekanntgeworden, die aus einem hochwertigen, rostfreien Federstahl oder Kunststoffband bestehen, welches schraubenförmig auf die zu schützende Gewindespindel aufgewunden und im Bereiche der Spindelmutter über Umlenkrollen um die Spindelmutter herum umgeleitet wird. Bei einer relativen Drehbewegung zwischen der Spindelmutter und der Spindel wickelt sich das Band je nach Drehrichtung auf der einen Seite der Spindelmutter ab, während es gleichzeitig auf der anderen Seite wieder aufgewickelt wird. Die Breite des Abdeckbandes muß dabei immer der Gewindesteigung der zu schützenden Spindel entsprechen, was bedeutet, daß Abdeckbänder unterschiedlicher Breite für alle vorkommenden Gewindesteigungen bereitgehalten werden müssen. Um ein einwandfreies Auf- und Abwickeln des Abdeckbandes zu gewährleisten, müssen Längendehnungen des Abdeckbandes mittels einer Spannvorrichtung aufgefangen werden, die gemeinsam mit den Umlenkrollen durch ein Gehäuse zu schützen ist, was insgesamt einen beträchtlichen technischen Aufwand bedingt.

Aufgabe der Erfindung ist es deshalb, eine Schutzabdeckung zu schaffen, die für Wellen oder Spindeln geeignet ist und kostengünstig in beliebiger Länge herstellbar ist, sich unter allen Einsatzbedingungen durch die jeweils erforderliche Stabilität auszeichnet und einen einwandfreien Schutz gewährleistet.

Zur Lösung dieser Aufgabe ist die Schutzabdeckung gemäß der Erfindung dadurch gekennzeichnet, daß bei einem Maschinenelement in Gestalt einer Welle oder Spindel die Abdeckhülle nach Art eines Schlauches mit in Umfangsrichtung ringförmig geschlossener Querschnittsgestalt ausgebildet ist und daß die Schieberelemente jeweils einen die Abdeckhülle umschließenden trichterförmigen Schließ- und Führungskegel aufweisen.

Die Abdeckhülle ist beidseitig des beweglichen Gliedes einwandfrei verschlossen. Die Anordnung kann ohne weiteres derart getroffen werden, daß der Längsschlitz staub- und spritzwasser- sowie schmiermitteldicht verschlossen ist. Da die Abdeckhülle sich nicht wie bei einem Faltenbalg längs des zu schützenden länglichen Maschinenelementes bewegt, sondern immer ortsfest verbleibt, kann sie für Spindelantriebe beliebiger Länge verwendet werden, wobei auch hinsichtlich der Einbaulage keinerlei Beschränkungen bestehen. Die Stabilität der Schutzabdeckung läßt sich durch entsprechende Wahl des Materiales und der Abmessungen der Abdeckhülle ohne großen Aufwand an die Erfordernisse des jeweiligen Einsatzzweckes anpassen, wobei es z. B. ohne weiteres möglich ist, die Schutzabdeckung sogar begehbar auszubilden und sie gegen praktisch alle vorkommenden aggressiven Medien widerstandsfähig zu machen.

Die Abdeckhülle besteht in der Regel aus Kunststoffmaterial, aus dem auch die Profilleiste und die Profilnut hergestellt sind. Es sind aber auch Fälle denkbar, bei denen die Profilleiste oder die Profilnut aus einem starren Material, beispielsweise Metall (etwa Aluminium), hergestellt ist, während das mit einer solchen starren Profilleiste oder -nut zusammenwirkende jeweils andere Schließelement naturgemäß aus einem elastischen Werkstoff besteht, der das fortlaufende Ein- und Ausführen der Profilleiste in die Profilnut entsprechend der Längsbewegung des beweglichen Gliedes erlaubt.

Die Profilleiste weist beispielsweise eine im wesentlichen keilförmige Querschnittsgestalt mit an der Wurzel liegender kleinster Dickenabmessung und einer abgerundeten oder angeschrägten Stirnfläche auf, wobei die Profilnut entsprechend hinterschnitten ist. In einer anderen Ausführungsform können die Profilleiste und die Profilnut jeweils auch eine im wesentlichen kreisförmige Querschnittsgestalt aufweisen, wobei hinzuzufügen ist, daß auch andere Querschnittsformen denkbar sind, bei denen eben Teile der Profilnut zugeordnete Teile der Profilleiste hintergreifen.

Abhängig von der Gestalt des die Schutzabdeckung durchdringenden beweglichen Gliedes kann die Abdeckhülle aus mehreren nebeneinander verlaufenden und jeweils durch einen mittels einer Profilnut und einer Profilleiste verschließbaren Längsschlitz getrennten Abdeckstreifen bestehen.

Der die Abdeckhülle umschließende trichterförmige Schließ- und Führungskegel kann mit seiner glatten Innenfläche unmittelbar die Schließfläche bilden, die bei einer Längsbewegung des beweglichen Gliedes die durchlaufende Abdeckhülle im Bereich des Längsschlitzes so zusammendrängt, daß die Profilleiste fortlaufend in die Profilnut sich einlegt, während auf der anderen Seite des beweglichen Gliedes das Öffnen des Längsgliedes beispielsweise dadurch geschieht, daß das bewegliche Glied selbst den Längsschlitz fortlaufend aufspreizt. Der Schließ- und Führungskegel kann aber auch einseitig nach innen zu keilförmig zulaufende, in Umfangsrichtung gegeneinander versetzt angeordnete und mit auf beiden Seiten des Längsschlitzes angeordneten Längsschultern der Abdeckhülle zusammenwirkende Schließund Öffnungssegmente enthalten. Diese Längsschultern können dabei auch seitlich jeweils mit einer rinnenförmigen Führungsnut versehen sein, in die eine zugeordnete Schließfläche des jeweiligen Schließsegmentes eingreift, womit ein einwandfreies Verschließen des Längsschlitzes auch unter schwierigen Bedingungen gewährleistet ist. Je nach den Gegebenheiten des Anwendungsfalles können die Längsschultern lediglich auf der Innen- oder der Außenseite der Abdeckhülle erhaben angeordnet sein, wobei die Abdeckhülle auf der jeweils gegenüberliegenden Seite im geschlossenen Zustand spaltfrei ist.

Daneben kann die Anordnung derart getroffen sein, daß jeder Schließ- und Führungskegel einen Innen- und einen dazu koaxialen Außenkegel aufweist, wobei die Abdeckhülle zwischen dem Innen- und dem Außenkegel geführt ist. Die erwähnten Schließ- und Öffnungssegmente können dann jeweils an dem Innen und/oder dem Außenkegel angeordnet sein.

Diese Schließ- und Führungskegel sind sehr einfache Bauelemente, die etwa aus Kunststoffmaterial oder Aluminium billig herstellbar sind und die ohne besondere Vorkehrungen an dem beweglichen Glied jeweils seitlich angesetzt, beispielsweise angeschraubt werden.

In der Zeichnung sind Ausführungsbeispiele des Gegenstandes der Erfindung dargestellt. Es zeigt

Fig. 1 einen Spindelantrieb mit einer Schutzabdeckung gemäß der Erfindung, geschnitten längs der Linie I-I der Fig. 2 in einer Seitenansicht,

Fig. 2 den Spindelantrieb nach Fig. 1, geschnitten längs der Linie II-II der Fig. 1 in einer Draufsicht,

Fig. 3 die Abdeckhülle der Schutzabdeckung des Spindelantriebs nach Fig. 1 im geschlossenen Zustand in einer stirnseitigen Draufsicht,

Fig. 4 eine Abdeckhülle für eine Schutzabdekkung gemäß der Erfindung in einer anderen Ausführungsform und in einer Darstellung entsprechend Fig. 3,

Fig. 5 ein Abdeckband der Abdeckhülle nach Fig. 2 in einer stirnseitigen Draufsicht,

Fig. 6 und 7 das Abdeckband nach Fig. 5, jeweils im Ausschnitt unter vergrößerter Detaildarstellung der Profilnut und der Profilleiste in einer Darstellung entsprechend Fig. 5,

Fig. 8 einen Spindeltrieb mit einer Schutzabdeckung gemäß der Erfindung in einer anderen Ausführungsform, teilweise im Schnitt, gemäß der Linie VIII-VIII der Fig. 9 in einer Seitenansicht,

Fig. 9 den Spindeltrieb nach Fig. 8 in einer stirnseitigen Draufsicht,

Fig. 10 den Spindeltrieb nach Fig. 8, geschnitten längs der Linie IX-IX der Fig. 9 im Ausschnitt und in der Abwicklung unter Veranschaulichung der Schließ- und Führungssegmente und

Fig. 11 die abgewickelt in einer Seitenansicht dargestellten Schließsegmente der Anordnung nach Fig. 10.

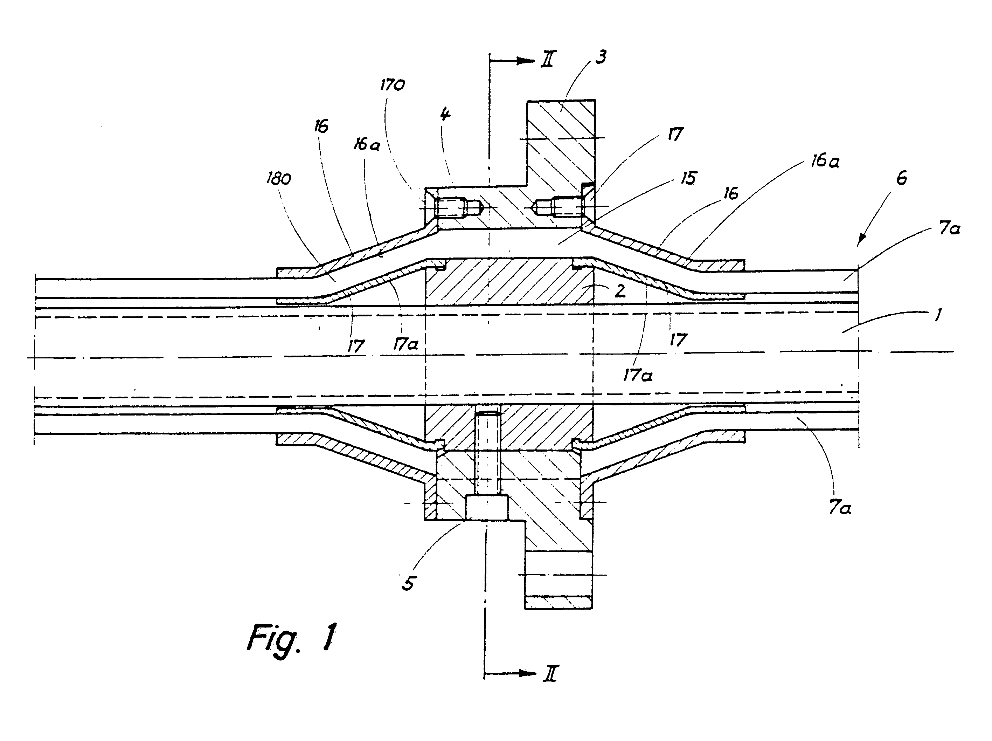

Der in den Fig. 1, 2 bzw. 8, 9 dargestellte Spindeltrieb weist eine Gewindespindel 1 und eine auf dieser angeordnete Spindelmutter 2 auf. Auf die Spindelmutter 2 ist ein zur Verbindung der Spindelmutter 2 mit einem nicht dargestellten Maschinenteil eingerichteter Ringflansch 3 mittels einer Nabe 4 aufgesetzt, die durch Schrauben 5 drehfest mit der Spindelmutter 2 verbunden ist. Die Spindelmutter 2 bildet gemeinsam mit dem Ringflansch 3 und der Nabe 4 ein bewegliches Glied, das bei einem Antrieb der Spindel 1 eine Längsverschiebung erfährt.

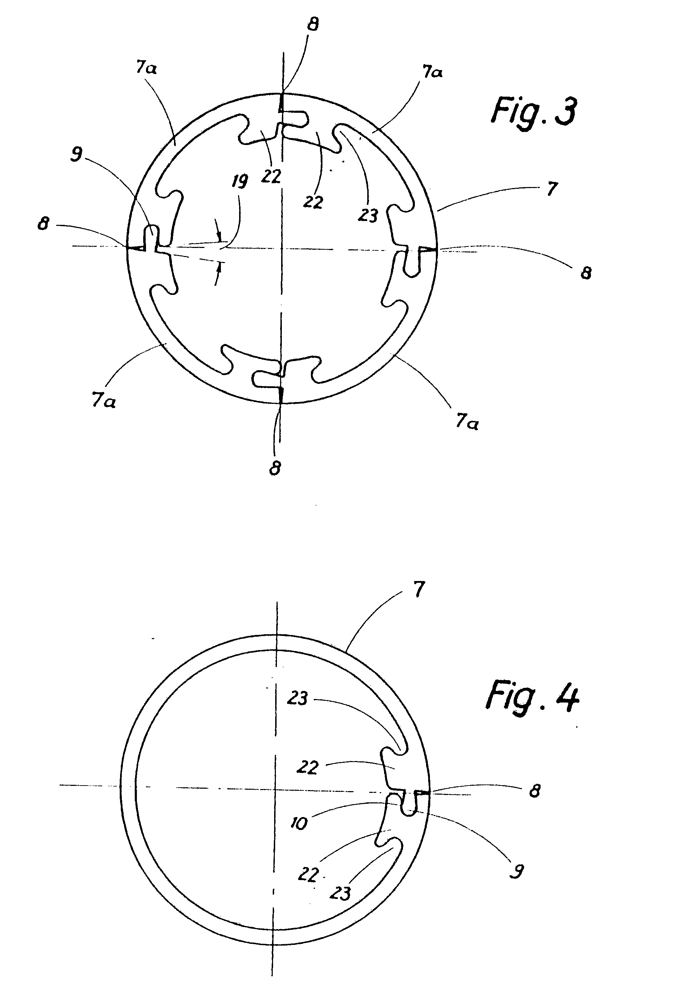

Die Spindel 1 ist beidseitig der Spindelmutter 2 durch eine Schutzabdeckung 6 abgedeckt, welche aus einer Abdeckhülle 7 gebildet ist, wie sie im einzelnen in Fig. 3 veranschaulicht ist.

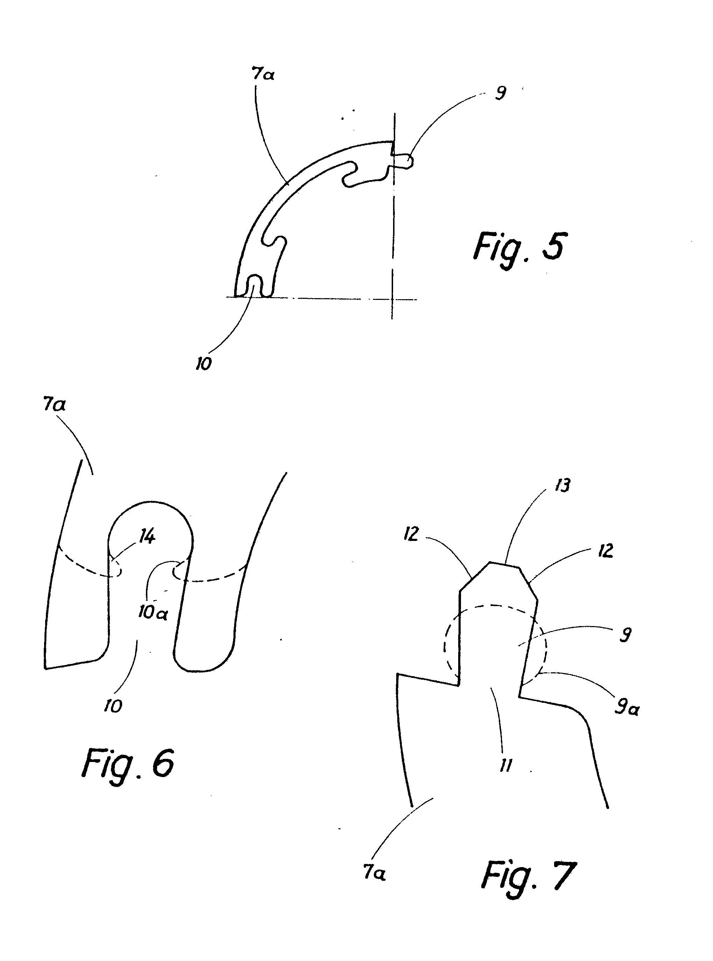

Die Abdeckhülle 7 ist nach Art eines Schlauches mit in Umfangsrichtung ringförmig geschlossener Querschnittsgestalt ausgebildet, durch die die Spindel 1 allseitig umschlossen ist. Sie besteht aus vier nebeneinander verlaufenden profilierten Abdeckstreifen 7a, die jeweils gleich gestaltet sind und von denen einer getrennt für sich in Fig. 5 veranschaulicht ist. Wie aus Fig. 3 zu entnehmen, sind bei geschlossener Abdeckhülle 7 die Abdeckstreifen 7a jeweils durch einen Längsschlitz 8 getrennt, der zur Außenumfangsfläche der Abdeckhülle 7 hin spaltfrei abgeschlossen ist. Die Abdeckstreifen 7a sind an der die Berandung eines solchen Längsschlitzes 8 bildenden Stirnfläche auf der einen Seite jeweils mit einer längs verlaufenden Profilleiste 9 ausgebildet, während sie auf der anderen Stirnseite mit einer im Querschnitt entsprechenden, ebenfalls längs verlaufenden Profilnut 10 versehen sind. Die Fig. 6, 7 veranschaulichen im einzelnen, daß die Profilleiste 9 eine im wesentlichen keilförmige Querschnittsgestalt mit an der Wurzel — bei 11 — liegender kleinster Dickenabmessung und mit bei 12 angeschrägter Stirnfläche 13 aufweist, während andererseits die Profilnut 10 bei 14 entsprechend hinterschnitten ist.

Grundsätzlich wäre es auch denkbar, die Profilleiste 9 mit einer kreisförmigen Querschnittsgestalt auszubilden und auch die Profilnut 10 entsprechend zu gestalten, wie dies in den Fig. 6, 7 bei 9a bzw. 10a gestrichelt veranschaulicht ist. Es sind auch noch weitere Querschnittsformen der Profilleiste 9 und der Profilnut 10 vorstellbar; wesentlich ist lediglich, daß die Profilleiste 9 und die Profilnut 10 einander hintergreifende Bereiche oder Teile aufweisen.

Bei der geschlossenen Abdeckhülle 7 (Fig. 3) sind die Abdeckstreifen 7a durch die miteinander zusammenwirkenden Profilleisten 9 und Profilnuten 10 fest und abgedichtet miteinander verbunden. Wegen der keilförmigen Profilgestalt der Profilleisten 9 und der Profilnuten 10 können hierbei verhältnismäßig große seitliche Kräfte auf die Abdeckstreifen 7a ausgeübt werden, ohne daß ein Aufplatzen eines Längsschlitzes 8 zu befürchten wäre.

Die die Spindel 1 allseitig umschließende geschlossene Abdeckhülle 7 ist lediglich im Bereiche der Spindelmutter 2 an den Längsschlitzen 8 geöffnet, um damit eine Kraftübertragung von der Spindelmutter 2 nach außen zu zu ermöglichen. Zu diesem Zwecke weist die Nabe 4 des Ringflansches 3 vier gleichmäßig längs des Umfanges verteilt angeordnete Durchlaßschlitze 15 auf, die jeweils derart bemessen sind, daß sie den Durchtritt eines Abdeckstreifens 7a ermöglichen. Außerdem sind an die Nabe 4 an beiden Stirnflächen zwei zueinander koaxiale trichterförmige Außenkegel 16 bei 170 angeschraubt, die ihrerseits koaxial zu der Spindel 1 ausgerichtet sind. Den Außenkegeln 16 sind entsprechende endseitig an der Spindelmutter 2 befestigte koaxiale Innenkegel 17 zugeordnet, die mit den Außenkegeln 16 einen Zwischenraum 180 einschließen, durch den jeweils die Abdeckstreifen 7a verlaufen und der derart bemessen ist, daß die Abdeckstreifen 7a einwandfrei geführt sind. Die paarweise einander zugeordneten Innen- und Außenkegel 16, 17 bilden jeweils einen zweiteiligen Schließ- oder Führungskegel bzw. -trichter mit mit der Abdeckhülle 7 zusammenwirkenden konisch zulaufenden Schließflächen 16a bzw. 17a.

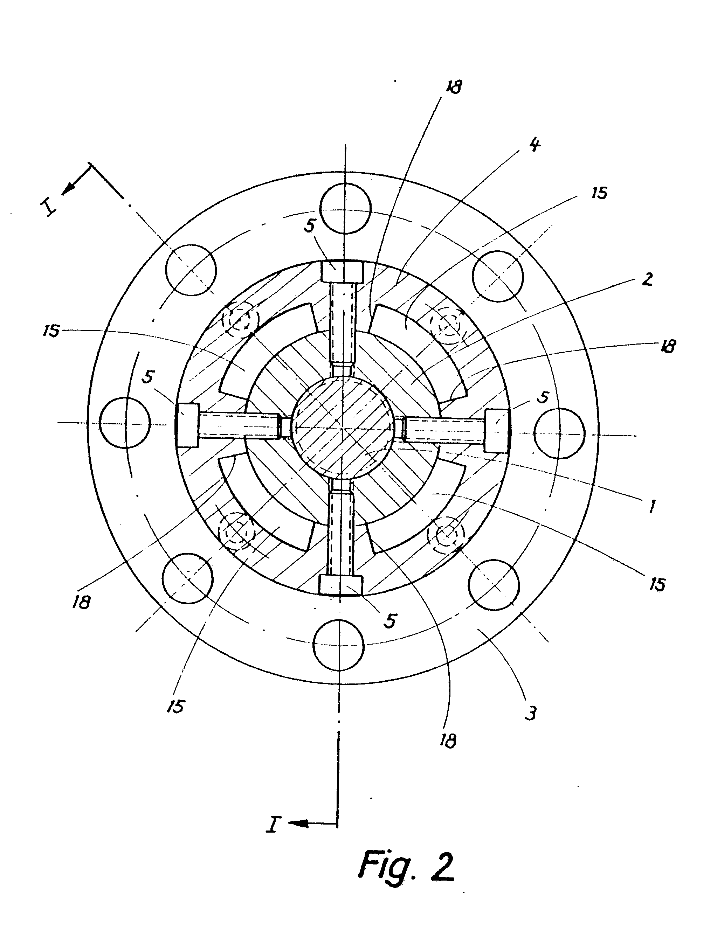

Wenn die Spindelmutter 2, bezogen auf Fig. 1, beispielsweise nach rechts bewegt wird, wird die geschlossene Abdeckung 7 (Fig. 3) zwischen dem rechten Außen- und Innenkegel 16, 17 radial aufgeweitet, wobei im Zusammenwirken mit den zwischen den Ausnehmungen 15 vorhandenen Stegen 18 (Fig. 2) die Abdeckung 7 fortlaufend entlang der Längsschlitze 8 geöffnet wird, wobei die Profilleisten 9 entsprechend dem Bewegungsfortschritt der Spindelmutter 2 aus den zugeordneten Profilnuten 10 austreten, was wegen der elastischen Verformbarkeit dieser aus Kunststoffmaterial bestehenden Teile ohne weiteres möglich ist.

Auf der linken Seite der Spindelmutter 2 werden die so getrennten Abdeckbänder 7a durch den linken Außen- und Innenkegel 16, 17 bzw. die konisch zusammenlaufenden Schließflächen 16a, 17a fortlaufend radial zusammengeführt, wodurch die Profilleisten 9 im Bereiche der sich zunehmend keilförmig verengenden Längsschlitze 8 fortlaufend in die zugeordneten Profilnuten unter gleichzeitiger elastischer Verformung dieser Teile eingedrückt werden.

Das Öffnen und Schließen der Abdeckhülle 7 erfolgt somit selbsttätig beidseitig der sich bewegenden Spindelmutter 2 nach Art eines Reißverschlusses mit durchgehender Kuppelgliedern in Gestalt der Profilleisten 9 und der Profilnuten 10.

Um sicherzustellen, daß die Längsschlitze 10 bei geschlossener Abdeckung 7 spaltfrei geschlossen sind, sind in der aus Fig. 3 ersichtlichen Weise die jeweils einen Längsschlitz 8 begrenzenden Stirnflächen der Abdeckstreifen 7a gegeneinander abgeschrägt, wie dies bei 19 veranschaulicht ist.

Bei dem in Fig. 1, 2 dargestellten und im vorstehenden beschriebenen Spindeltrieb besteht die Abdeckhülle 7 mit Rücksicht auf die Abmessungen der Spindelmutter 2 und des Ringflansches 3 aus vier Abdeckstreifen 7a. Die Zahl der Abdeckstreifen 7a kann jedoch an sich beliebig so gewählt werden, wie dies im Hinblick auf die Ausbildung und Gestaltung des beweglichen Gliedes erforderlich ist. Bei der in Fig. 4 veranschaulichten Ausführungsform der Abdeckhülle 7 ist diese sogar durch ein einziges, kreisringförmig gebogenes, schlauchförmiges Profilteil gebildet, das aus elastischem Material hergestellt ist und im Bereiche seines Längsschlitzes 8 mit einer Profilleiste 9 und einer Profilnut 10 versehen ist, deren Gestaltung und Wirkungsweise bereits erörtert wurden.

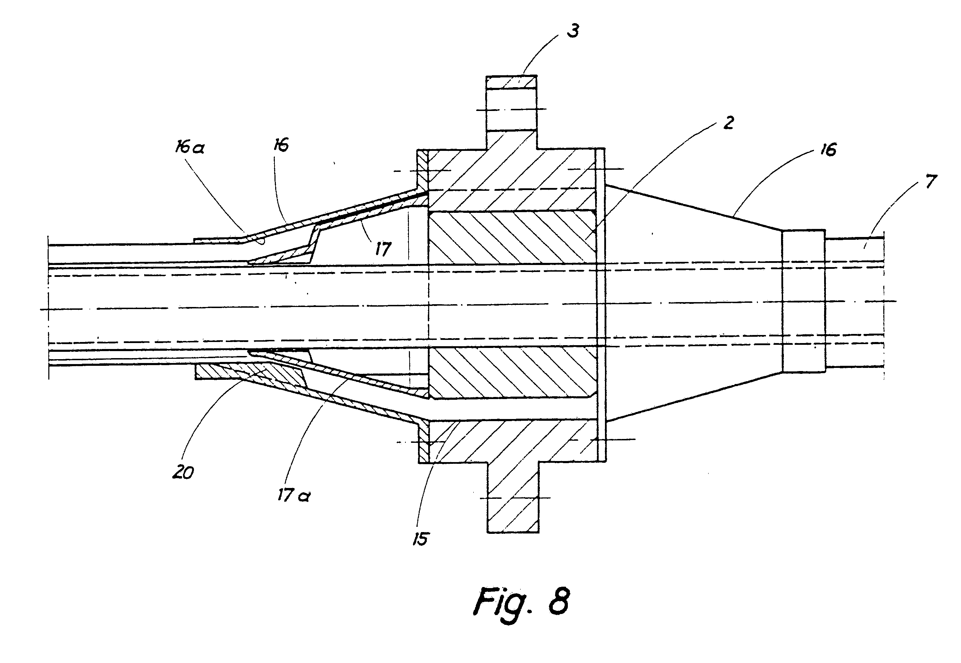

Die in den Fig. 8 bis 10 veranschaulichte Ausführungsform eines Spindeltriebs mit einer neuen Schutzabdeckung entspricht im wesentlichen jener nach den Fig. 1 bis 3. Gleiche Teile sind deshalb mit gleichen Bezugszeichen versehen; sie werden im einzelnen nicht nochmals erläutert.

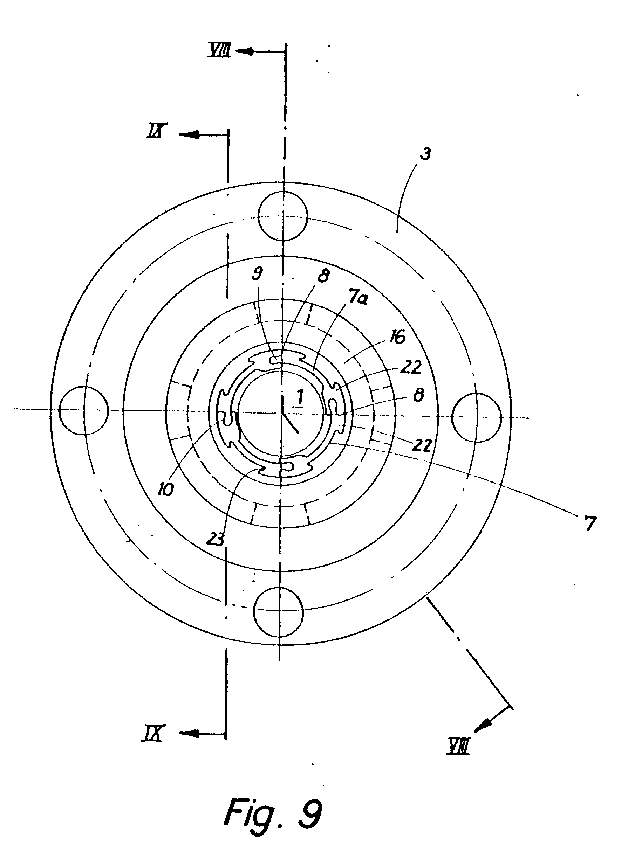

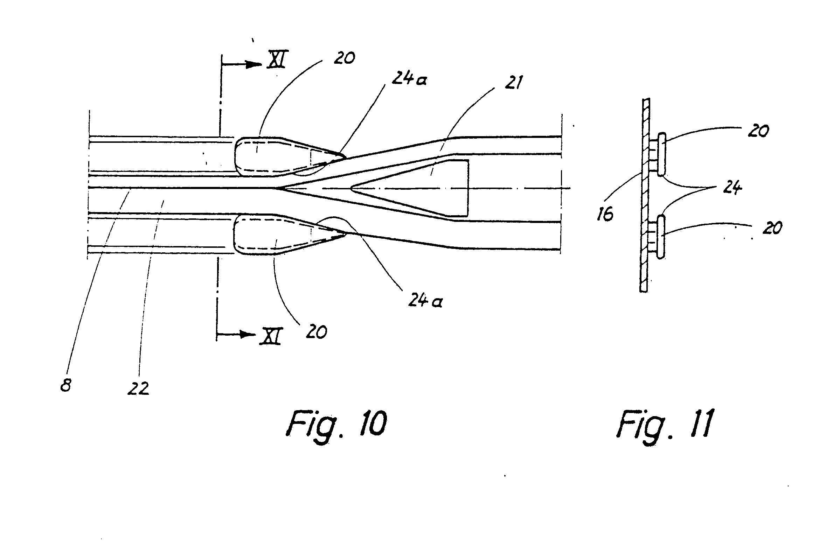

Bei dieser Ausführungsform sind an dem Außenkegel 16 und dem Innenkegel 17 auf jeder Seite der Spindelmutter 2 jeweils paarweise einander zugeordnete Schließsegmente 20 sowie mit diesen zusammenwirkende Öffnungssegmente 21 angeordnet, deren Gestalt insbesondere aus der Abwicklung aus Fig. 10 zu ersehen ist. Die Schließsegmente 20 und die Öffnungssegmente 21 weisen jeweils eine im wesentlichen keilförmige Gestalt auf, wobei die Anordnung derart getroffen ist, daß jedem Längsschlitz 8 der Abdeckhülle 7 ein Paar Schließsegmente 20 mit zu der Spindelmutter 2 zu weisender Spitze und ein gegenüber diesen jeweils um die halbe Abdeckstreifenteilung versetztes Schließsegment 21 mit von der Spindelmutter 2 wegweisender Spitze und im Abstand zu den Schließsegmenten 20 stehend zugeordnet sind. Die Abdeckstreifen 7a der Abdeckhülle 7 sind (Fig. 9) auf ihrer Außenseite im Bereiche der Längsschlitze 8 jeweils mit durchgehenden Längsschultern 22 versehen, die parallel zu den Längsschlitzen 8 verlaufen und diesen jeweils paarweise zugeordnet sind. Diese Längsschultern 22 sind ersichtlich hinterschnitten, d. h. mit einer Führungsnut 23 ausgebildet, in die eine entsprechende Randleiste 24 (Fig. 11) der Schließsegmente 20 eingreift, so daß die Abdeckstreifen 7a im Bereiche der Längsschlitze 8 einwandfrei geführt sind. Die Randleisten 24 bilden die konisch zulaufenden Schließflächen 24a (Fig. 10).

Bei der Längsbewegung der Spindelmutter 2 bezüglich der Abdeckhülle 7 werden — je nach der Bewegungsrichtung — die Längsschlitze 8 der Abdeckhülle 7 durch die entsprechend ihrer Anordnung längs des Umfanges der Außen- und Innenkegel 16, 17 verteilt angeordneten Schließ- und Öffnungssegmente 20 bzw. 21 entweder fortlaufend geöffnet oder fortlaufend geschlossen, wie dies aus der Abwicklung nach Fig. 10 ohne weiteres verständlich ist.

Während bei der erläuterten, in Fig. 9, 10 dargestellten Abdeckhülle 7 die Längsschultern 22 auf der Außenseite der Abdeckhülle 7 angeordnet sind, sind sie bei den Ausführungsformen der Abdeckhülle 7 nach den Fig. 3, 4 auf der Innenseite der Abdeckhülle 7 vorgesehen. Für eine solche Abdeckhülle können dann die Öffnungs- und Schließsegmente 20, 21 in entsprechender Weise an dem Außen- und Innenkegel 16 bzw. 17 auf jeder Seite der Spindelmutter 2 vorgesehen werden.

Die Abdeckhülle 7 besteht in der Regel aus einem elastischen Kunststoffmaterial, wobei die Profilleiste 9 einstückig angeformt ist. Die ganze Abdeckhülle (Fig. 4) oder die einzelnen sie bildenden Abdeckstreifen 7a bzw. 70a können in einfacher Weise durch Strangpressen hergestellt werden. Für besondere Anwendungsfälle ist es aber auch denkbar, etwa die Profilleiste 9 oder den Bereich der Profilnut 10 jeweils aus einem anderen, beispielsweise elastischeren Kunststoffmaterial herzustellen als die übrigen Teile der Abdeckhülle oder der Abdeckstreifen. Es sind sogar Ausführungsformen denkbar, bei denen die Profilleiste 9 aus einem unelastischen Material, beispielsweise Aluminium, besteht, so daß beim Öffnen und Verschließen eines Längsschlitzes 8 lediglich die Profilnut 10 begrenzenden Teile der Abdeckhülle elastisch ausweichen. Umgekehrt kann auch die Profilleiste 9 aus elastischem Material hergestellt sein, während die Profilnut 10 in einem unelastischen Material ausgebildet ist.

**Patentansprüche**

1. Schutzabdeckung (6) für ein zumindest teilweise freiliegendes längliches Maschinenelement (1), dem mindestens ein die Schutzabdeckung durchdringendes, relativ zu dem Maschinenelement längsbewegliches Glied (2) zugeordnet ist, mit einer sich längs des Maschinenelementes erstreckenden und dieses abdeckenden elastischen Abdeckhülle (7), die mit einem durchgehenden Längsschlitz (8) versehen ist, dessen beide Ränder nach Art eines Reißverschlusses auf der einen Seite eine längsverlaufende Profilnut (10) und auf der anderen Seite eine zugeordnete, ebenfalls längsverlaufende Profilleiste (9) tragen, wobei an dem beweglichen Glied, in Bewegungsrichtung gesehen vorne und hinten, jeweils ein bei einer Längsbewegung des beweglichen Gliedes die beidseitig des Längsschlitzes liegenden Teile der Abdeckhülle unter Verschluß des lediglich im Bereich des beweglichen Gliedes geöffneten Längsschlitzes durch die in die Profilnut sich fortlaufend einlegende Profilleiste zusammenführendes Schieberelement mit aufeinander zulaufenden, mit der Abdeckhülle zusammenwirkenden Schließflächen (16a, 17a) angeordnet ist, dadurch gekennzeichnet, daß bei einem Maschinenelement in Gestalt einer Welle oder Spindel die Abdeckhülle (7) nach Art eines Schlauches mit in Umfangsrichtung ringförmig geschlossener Querschnittsgestalt ausgebildet ist und daß die Schieberelemente jeweils einen die Abdeckhülle (7) umschließenden trichterförmigen Schließ- und Führungskegel (16) aufweisen.

2. Schutzabdeckung nach Anspruch 1, dadurch gekennzeichnet, daß die Abdeckhülle (7) aus mehreren nebeneinander verlaufenden und jeweils durch einen mittels einer Profilnut (10) und einer Profilleiste (9) verschließbaren Längsschlitz (8) getrennten Abdeckstreifen (7a) besteht.

3. Schutzabdeckung nach Anspruch 1 oder 2, dadurch gekennzeichnet, daß bei der Abdeckhülle (7) die Profilleiste (9) oder die Profilnut (10) aus einem starren Material, beispielsweise Metall, hergestellt ist.

4. Schutzabdeckung nach einem der Ansprüche 1 bis 3, dadurch gekennzeichnet, daß bei der Abdeckhülle (7) die Profilleiste (9a) und die Profilnut (10a) jeweils eine im wesentlichen kreisförmige Querschnittsgestalt aufweisen.

5. Schutzabdeckung nach einem der vorhergehenden Ansprüche, dadurch gekennzeichnet, daß jeder Schließ- und Führungskegel einseitig nach innen zu keilförmig zulaufende, in Umfangsrichtung gegeneinander versetzt angeordnete und mit auf beiden Seiten des Längsschlitzes (8) angeordneten Längsschultern (22) der Abdeckhülle (7) zusammenwirkende Schließ- und Öffnungssegmente (20, 21) enthält.

6. Schutzabdeckung nach Anspruch 5, dadurch gekennzeichnet, daß die Längsschultern seitlich jeweils eine rinnenförmige Führungsnut (23) aufweisen, in die eine zugeordnete Schließfläche (24a) des jeweiligen Schließsegmentes (20) eingreift.

7. Schutzabdeckung nach Anspruch 5 oder 6, dadurch gekennzeichnet, daß die Längsschultern (22) jeweils lediglich auf der Innen- oder der Außenseite der Abdeckhülle (7) erhaben angeordnet sind und die Abdeckhülle (7) auf der jeweils gegenüberliegenden Seite im geschlossenen Zustand spaltfrei ist.

8. Schutzabdeckung nach einem der vorhergehenden Ansprüche, dadurch gekennzeichnet, daß jeder Schließ- oder Führungskegel einen Innen- und einen dazu koaxialen Außenkegel (17, 16) aufweist und die Abdeckhülle (7) zwischen dem Innen- und dem Außenkegel geführt ist.

9. Schutzabdeckung nach den Ansprüchen 5 und 8, dadurch gekennzeichnet, daß die Schließ- und Öffnungssegmente (20, 21) jeweils an dem Innenkegel (17) und/oder dem Außenkegel (16) angeordnet sind.

## Claims

1. Protective cover (6) for an at least partially exposed elongated machine element (1) coacting with at least one longitudinally movable member (2) passing through the said protective cover and comprising an elastic covering sheath (7) extending along the said machine element and covering the latter, the said sheath (7) being provided with a full-length longitudinal slot (8) whose two edges carry on the one hand a longitudinally extending profiled groove (10) and on the other hand a coacting, likewise longitudinal profiled bead (9) similar to a slide fastener, the movable member carrying on its front and rear ends, viewed in the direction of movement, a slider element with closing faces (16a, 17a) tapering towards each other and coacting with the covering sheath, which slider element aacts to move together the parts of the covering sheath disposed on both sides of the longitudinal slot, as the movable member is moved in the longitudinal direction, thus closing the longitudinal slot, which is open only in the area of the movable member, by introducing the profiled bead continuously into the profiled groove, characterized in that when the machine element has the shape of a shaft or a spindle the covering sheath (7) is designed in the form of a hose having a annular closed cross-section and that each of the slider elements comprises a funnel-shaped closing and guiding cone (16) embracing the covering sheath (7).

2. A protective cover in accordance with claim 1, characterized in that the covering sheath (7) comprises a plurality of covering strips (7a) arranged one beside the other and separated by longitudinal slots (8) each of which can be closed by means of a profiled groove (10) and a profiled bead (9).

3. A protective cover in accordance with claim 1 or 2, characterized in that the profiled bead (9) or the profiled groove (10) of the covering sheath is made of a rigid material, such as metal.

4. Protective cover in accordance with any of claims 1 to 3, characterized in that the cross-sectional shape of the profiled bead (9a) and the profiled groove (10a) of the covering sheath (7) is substantially circular.

5. Protective cover in accordance with any of the preceding claims, characterized in that each closing and guiding cone comprises closing and opening segments (20, 21) coacting with longitudinal shoulders (22) of the covering sheath (7) disposed on both sides of the longitudinal slot (8), the said segments tapering inwardly in one direction in the form of a wedge and being disposed in staggered arrangement in circumferential direction.

6. Protective cover in accordance with claim 5, characterized in that the longitudinal shoulders are each provided on their sides with a channel-shaped guiding groove (23) for being engaged by a coacting closing face (24a) of the respective closing segment (20).

7. Protective cover in accordance with claim 5 or 6, characterized in that the longitudinally ex tending shoulders (22) project only from either the inner or the outer face of the covering sheath (7) and that the opposite face is free from gap in the closed condition.

8. Protective cover in accordance with any of the preceding claims, characterized in that each closing or guiding cone comprises an inner cone and an outer cone in coaxial arrangement (17, 16) and that the covering sheath (7) is guided between the inner and the outer cone.

9. Protective cover in accordance with claims 5 and 8, characterized in that the closing and opening segments (20, 21) are arranged on the inner cone (17) and/or the outer cone (16).

## Revendications

1. Revêtement de protection (6) pour un élément de machine (1) oblong au moins partiellement découvert auquel est associé au moins un organe (2) passant à travers le revêtement et déplaçable longitudinalement par rapport à l'élément de machine, comprenant une gaine protectrice élastique (7) qui, s'étendant le long de l'élément de machine et recouvrant ce dernier, est munie d'une fente longitudinale continue (8) dont les deux bords, à la manière d'une fermetureéclair, portent, d'un côté, une rainure profilée (10) disposée dans le sens de la longueur et, de l'autre côté, une languette profilée (9) y associée également disposée dans le sens de la longueur, sur l'organe mobile étant respectivement monté, à l'avant et à l'arrière vu dans le sens du déplacement, un élément coulissant qui comporte des surfaces de fereture (16a, 17a) disposées l'une au-dessus de l'autre et coopérant avec la gaine protectrice et qui, lors d'un déplacement longitudinal de l'organe mobile, réunit les parties de la gaine protectrice qui sont situées des deux côtés de la fente longitudinale en fermant cette dernière, uniquement ouverte dans la zone de l'organe mobile, au moyen de la languette profilée s'engageant continuellement dans la rainure profilée, caractérisé par le fait que, dans le cas d'un élément machine se présentant sous la forme d'un arbre ou d'une broche, la gaine protectrice (7) est réalisée à la manière d'un tuyau flexible de section transversale fermée en forme d'anneau dans le sens périphérique et que les éléments coulissants comportent respectivement un cône de fermeture et de guidage (16) en forme d'entonnoir entourant la gaine protectrice (7).

2. Revêtement de protection selon la revendication 1, caractérisé par le fait que la gaine protectrice (7) est constituée de plusieurs bandes de recouvrement (7a) disposées les unes à côté des autres et respectivement séparées par une fente lognitudinale (8) pouvant être fermée au moyen d'une rainure profilée (10) et d'une languette profilée (9).

3. Revêtement de protection selon la revendication 1 ou 2, caractérisé par le fait que, dans la gaine protectrice (7), la languette profilée (9) ou la rainure profilée (10) est réalisée en un matériau rigide, par exemple en métal.

4. Revêtement de protection selon l'une des revendications 1 à 3, caractérisé par le fait que, dans la gaine protectrice (7), la languette profilée (9a) et la rainure profilée (10a) ont respectivement une section tranversale sensiblement circulaire.

5. Revêtement de protection selon l'une des revendications précédentes, caractérisé par le fait que chaque cône de fermeture et de guidage compred des segments de fermeture et d'ouverture (20, 21) se terminant en forme de coins d'un côté vers l'intérieur, disposés mutuellement décalés dans le sens périphérique et coopérant avec des épaulements longitudinaux (22) de la gaine protectrice (7) qui sont placés des deux côtés de la fente lognitudinale (8).

6. Revêtement de protection selon la revendication 5, caractérisé par le fait que les épaulements longitudinaux comportent respectivement sur le côté une rainure de guidage (23) en forme de rigole dans laquelle s'engage une surface de fermeture associée (24a) du segment de fermeture (20) à chaque fois considéré.

7. Revêtement de protection selon la revendication 5 ou 6, caractérisé par le fait que les épaulements longitudinaux (22) sont respectivement disposés en relief uniquement sur la face intérieure ou sur la face extérieure de la gaine protectrice (7) et que la gaine protectrice (7) sur la face respectivement opposée est sans joint à l'état fermé.

8. Revêtement de protection selon l'une des revendicationsprécédentes, caractérisé par le fait que chaque cône de fermeture ou de guidage comporte un cône intérieur et un cône extérieur coaxial à celui-ci (17, 16) et que la gaine protectrice (7) passe entre le cône intérieur et le cône extérieur.

9. Revêtement de protection selon les revendications 5 et 8, caractérisé par le fait que les segments de fermeture et d'ouverture (20, 21) sont respectivement disposés sur le cône intérieur (17) et/ou sur le cône extérieur (16).

Fig. 1

**Fig. 2**

0 084 595

Fig. 3

Fig. 4

13

7α

9

**Fig. 5**

10

7α

14

10α

10

**Fig. 6**

13

12

12

9

9α

11

7α

**Fig. 7**

*Fig. 8*

Fig. 9

Fig. 10

Fig. 11